# EUROPEAN PATENT SPECIFICATION

(11) **EP 1 719 423 B1**
(45) Date of publication and mention of the grant of the patent: **22.03.2017**
(21) Application number: 05710556.1
(22) Date of filing: 23.02.2005
(51) Int. Cl.: A41H 43/00, G06T 13/00, G06F 17/50

(54) **METHOD AND DEVICE FOR SIMULATING WEARING OF A KNIT GARMENT ON A HUMAN MODEL AND PROGRAM THEREOF**
VERFAHREN UND VORRICHTUNG FÜR DAS SIMULIEREN DES TRAGENS EINES GEWIRKTEN KLEIDUNGSSTÜCKS DURCH EIN LEBENDES MODEL UND PROGRAMM DAVON
PROCEDE ET DISPOSITIF DE SIMULATION DU PORT D' UN VÊTEMENT EN TRICOT SUR UNE SILHOUETTE HUMAINE ET PROGRAMME PREVU A CET EFFET

(30) Priority: 26.02.2004 JP 2004050896
(43) Date of publication of application: 08.11.2006
(73) Proprietor: Shima Seiki Manufacturing., Ltd., Wakayama-shi, Wakayama 6410003 (JP)
(72) Inventor: YAMAMOTO, Shinji, Wakayama-shi, Wakayama 6410003 (JP); NISHIKAWA, Tadanori, Wakayama-shi, Wakayama 6410003 (JP); TERAI, Koichi, Wakayama-shi, Wakayama 6410003 (JP); Fukuda, Tetsuya, Wakayama-shi, Wakayama 6410003 (JP)
(74) Representative: Emde, Eric
(86) International application number: PCT/JP2005/002863
(87) International publication number: WO 2005/082185

(56) References cited:
- WO-A1-03/024261
- FR-A1- 2 799 556
- JP-A- 11 238 086
- JP-A- 11 296 573
- JP-A- 2000 003 383
- JP-A- 2000 331 058
- JP-A- 2002 117 414
- JP-A- 2004 252 594
- JP-A- 2005 011 027
- US-A- 5 850 222

## Description

### TECHNICAL FIELD

The present invention relates to virtual wearing, by a human model, of a knit garment such as a seamless tubular-shaped knit garment or the like.

### BACKGROUND ART

"The Art of Knitted Fabrics, Realistic & Physically Based Modeling of Knitted Patterns" (EUROGRAPHICS '98, Vol. 17, (1998), Number 3) discloses a method of three-dimensionally simulating the shape of a knit garment. In this knit garment, assume that the stitches of the knit garment as material points are connected with one another via springs, and an equation of motion of the stitches is solved to simulate the form of the garment three-dimensionally. However, how the knit garment is applied to the human model is not disclosed.

Japanese Patent Application Laid-Open No. H9-273017 proposes a method of expanding and wearing a garment to fit it over a human body on the simulation of stretchy garments such as swim wears.

Japanese Patent Application Laid-Open No. H8-44785 proposes a method in which a garment is split into a plurality of pieces and each piece is caused to collide with a human body to simulate a state in which the garment is worn.

The inventors have discovered that the stitch arrangement in a virtual knit garment is distorted when the knit garment is applied to a human model by using a relatively simple model. It is considered that the stitch arrangement is not distorted during the process of attachment if a stable stitch position is obtained by connecting the stitches with one another via virtual springs, as described in "The Art of Knitted Fabrics, Realistic & Physically Based Modeling of Knitted Patterns" (EUROGRAPHICS '98, Vol. 17, (1998), Number 3). However, "The Art of Knitted Fabrics, Realistic & Physically Based Modeling of Knitted Patterns" (EUROGRAPHICS '98, Vol. 17, (1998), Number 3) does not disclose how the knit garment is applied to three-dimensional human model. It is considered difficult to obtain the stable stitch position while moving a number of stitches connected with one another along the surface of the three-dimensional human model, hence a significant amount of calculation is considered to be required. Further, Japanese Patent Application Laid-Open No. H8-44785 relates to a woven fabric, thus a distortion of stitch arrangement during attachment of the fabric does not have to be considered.

The swimming wear described in Japanese Patent Application Laid-Open No. H9-273017 has a shoulder strap at the tubular part of the torso but does not have the parts for body and sleeves as in a general garment. A knit garment with a body and sleeves, and a knit garment such as a pair of pants or slacks are not applied to one cylinder in the form of a torso, but are applied to a complex human model with a torso and arms or with a torso and legs. Therefore, wearing of a knit garment becomes complicated, and the stitch arrangement therein easily becomes stiff and unnatural.

Prior art document US 5 850 222 A discloses a computer system for displaying clothing on a rendered image of a human body referred to as a virtual dressing room system (VDRS). the VDRS receives a series of contour lines defining the three-dimensional shape of the human body. A contour line is a series of points that defines the perimeter of the body in a horizontal plane. The VDRS also receives a sequence of points defining the two-dimensional shape of the clothing. The VDRS also scales the sequence of points defining the two-dimensional shape of the clothing to the approximate width of a portion of the human body over which the clothing is worn. For each point of the two-dimensional shape, the VDRS identifies a corresponding point on a contour line, and adjusts the point of the two-dimensional shape of the clothing to correspond to the identified point. The VDRS renders the shape of the human body on a display device, and renders the scaled and adjusted two-dimensional shape of the clothing on the display device to effect the display of the human body wearing the clothing.

From prior art document FR 2 799 556 A1 a method and apparatus of viewing e a garment made up of garment pieces and having seam lines on a dummy model is known which comprises a step of placing the garment pieces on the surface of the dummy or on a surface derived from the surface of a dummy, joining together the garment pieces along their seam lines, and relaxing each garment piece from its position on the surface of the dummy to its equilibrium position on the dummy.

### DISCLOSURE OF THE INVENTION

An object of the present invention is to apply a virtual garment having a number of stitches to a human model with a plurality of axes, with relatively a small amount of calculation using a reliable model.

A secondary object of the present invention is to simply and realistically simulate a state in which the sleeves are applied to arms.

A secondary object of the present invention is to remove gaps which are generated when the directions of movement of the virtual knit garment differ depending on the axis of the human model when the knit garment is worn.

The secondary object is achieved by rearranging the stitch arrangement in natural positions after the knit garment is worn.

These and other objects are met by a method for simulating wearing of a knit garment on a human model having the features and steps, respectively, as set forth in claim 1. Preferred embodiments of the method are stated in the subclaims 2 to 4.

In the present invention, a method is provided for simulating wearing of a knit garment on a human model, the knit garment being a virtual knit garment and having a plurality of parts, the human model being a three-dimensional human model and comprising a plurality of polygons, the method comprises the steps of:
providing the human model with a plurality of axes;
matching each of the parts of the knit garment with any of the plurality of axes and temporarily positioning the knit garment with respect to the human model; and
shrinking/expanding the temporarily positioned knit garment toward the axis matched with each of the parts of the knit garment in a peripheral direction to obtain a natural size of each of the parts, whereby the knit garment is worn on the human model so that each of the parts appears outside the human model.

The mentioned objects are also solved by a device for simulating wearing of a knit garment on a human body having the features as defined in claim 5. Preferred embodiments of this device are mentioned in claims 6 to 8.

In the present invention, a device is provided for simulating wearing of a knit garment on a human model, the knit garment being a virtual knit garment and having a plurality of parts, the human model being a three-dimensional human model and comprising a plurality of polygons, the device comprises:
storage means for storing positions of a plurality of axes provided on the human model;
matching means for matching each of the parts of the knit garment with any of the plurality of axes;
temporary arranging means for temporarily arranging each of the parts, within a three-dimensional space, with respect to the matching axis; and
wearing means for shrinking/expanding each of the parts in a peripheral direction toward the matching axis to obtain a natural size of each of the parts so that each of the parts appears outside the human model,
wherein the knit garment which is temporarily positioned with respect to the axes is shrunk/expanded toward the axis matched with each of the parts, and thereby worn on the human model.

In the method and device for simulating wearing of a knit garment of the present invention, preferably, the human model comprises at least a torso and both arms, along with an axis for the torso and axes for the right and left arms, the virtual knit garment comprises a plurality of parts comprising at least a body and sleeves, each part is matched with any of the axes of the human model, and the temporal positioning is performed so that the axis passes through the inside of the matching part, both sleeves of the virtual garment are shrunk/expanded such that upper parts of the both sleeves contact with upper parts of the arms of the human model and spaces are provided at lower parts of the both sleeves with respect to the lower parts of the arms of the human model.

Further, in the method and device for simulating wearing of a knit garment of the present invention, preferably, after wearing the virtual knit garment to the human model, each of stitches of the virtual garment is rearranged along a course direction and wale direction of the virtual knit garment, whereby the distortions between the parts with different matching axes in the virtual knit garment are removed. This processing is sometimes called "approximate correction".

Moreover, in the method and device for simulating wearing of a knit garment of the present invention, preferably, after wearing of the knit garment, each of the stitches of the knit garment is moved close to a surrounding mean position of the stitch to smooth the stitch position of the knit garment, and the smoothing is repeated.

This specification focuses only on a knit garment, and "knit" is often abbreviated simply, and thus the knit garment is referred to as "garment". Further, only a virtual garment is focused, "virtual" is often abbreviated simply, and thus expressions such as "garment is applied", "garment is expanded" and the like are used.

In embodiments, an example is shown in which the knit garment is expanded and the expanded knit garment is caused to shrink toward a human model before the knit garment is temporarily positioned. This is a model simulating a case in which a human expands and wears the garment. However, contrary to this model, after the knit garment is applied to the human model, the garment may be moved toward an external side of the human model, and restrictions may be imposed such that the garment is moved until the peripheral length satisfies a predetermined condition.

In the present invention, fitting of each part of the knit garment to a human body parts such as arms and torso is simulated by shrinking/expanding the part toward the axis of the human model. Therefore, such simulation can be performed with relatively a small amount of calculation on the basis of a concrete model.

It is natural that upper parts of the sleeves are supported by upper parts of the arms and spaces are present on the arms at lower parts thereof. It is difficult to obtain the degree of sagging of the sleeves from the gravity acting on the sleeves. Therefore, during the process of shrinking and expansion of the sleeves, for example, the sleeves are shrunk/expanded so that the upper parts of the sleeve contact with the upper parts of the arms and space are provided with respect to the lower parts of the arm of the human model at the lower parts of the both sleeves. In this manner, the sleeves can be simulated without calculating deformation of the sleeves which is caused by the gravity.

The knit garment is split into a plurality of parts, and these parts are shrunk/expanded toward a plurality of axes. Even for close stitches, the directions of movement thereof vary depending on the axes thereof during shrinking and expansion, whereby a large space is sometimes generated between the stitches. Therefore, after wearing the virtual knit garment to the human model, each of the stitches of the virtual knit garment is rearranged (roughly corrected) along the course direction and wale direction of the garment. Accordingly, the distortions among the parts with different matching axes in the virtual knit garment can be removed.

In this processing, for example, a stitch between adjacent stitches (stitch to be roughly corrected) is moved toward the mean position between the adjacent stitches in the course direction and wale direction. In this case, it is not necessary to literally move the stitch to be roughly corrected to the mean position between the adjacent stitches, but it is only necessary to bring the stitch to be roughly corrected close to the mean position. Further, in the approximate correction in the course direction or wale correction, a group of target stitches on a course or wale, e.g. all stitches on the course or all stitches on the wale, may be moved while keeping the distance between the stitch constant. For example, all stitches per course or per wale may be moved so as to be arranged evenly between both ends of the course or both ends of the wale.

It is preferred that the approximate correction be performed, for example, one through ten times, and that the correction be performed only between the stitches in the same course or in the same wale without considering stitch positions on top and bottom course or stitch positions on top and bottom wale so that a stitch can be moved significantly at one approximate correction. Furthermore, in order to remove the distortions of the connections between the body and sleeves, in the approximate correction in the course direction, it is preferred that the stitch positions on the course only be corrected without correcting the straight or curved shape itself of the course. In the approximate correction in the wale direction, on the other hand, it is preferred to correct the shape itself of the wale which deviates significantly from the straight line by, for example, being pulled by a sleeve. These corrections can be performed by smoothing the curved shape of the wale to form an almost straight wale, and by bringing a stitch position close to the middle between a front and back stitches, the stitch position being perpendicular to the longitudinal direction of the wale.

When wearing of the garment, the stitches are expanded or shrunk and embedded in concave and convex unit of the human model. By smoothing a stitch positions with reference to the surrounding stitches, the stitch arrangement becomes an almost natural arrangement. By repeating the smoothing to approximate the stitch arrangement to a stable value, the stitch arrangement is smoothed sufficiently and becomes a natural arrangement which remain unaffected by the simulation method.

### BRIEF DESCRIPTION OF THE DRAWINGS

Fig. 1 is a block diagram of the device for simulating wearing of a knit garment of the embodiments;
Fig. 2 is a flowchart showing an outline of the method of simulating wearing of a knit garment of the embodiments;
Fig. 3 is a block diagram of the program for simulating wearing of a knit garment of the embodiments;
Fig. 4 is a flowchart showing a preliminary deformation algorithm in the embodiments;
Fig. 5 is a figure schematically showing a deformation of the collar in the embodiments;
Fig. 6 is a flowchart showing a deformation algorithm of the collar in the embodiments;
Fig. 7 is a flowchart showing wearing algorithm in the embodiments;
Fig. 8 is a figure schematically showing axes of the torso and both arms of a human model used in the embodiments;
Fig. 9 is a view schematically and horizontally showing wearing of the garment by shrinking the garment in a peripheral direction of the body with respect to the torso in the embodiments;
Fig. 10 is a view schematically and vertically showing wearing of the garment by shrinking the garment in a peripheral direction of a sleeve with respect to an arm in the embodiments;
Fig. 11 is a figure schematically and horizontally showing wearing of the garment by shrinking the garment in a peripheral direction of the collar with respect to the neck in the embodiments;
Fig. 12 is a figure schematically and vertically showing the knit garment after wearing in the embodiments;
Fig. 13 is a figure schematically showing a movement of a stitch toward a polygon in the embodiments;
Fig. 14 is a figure schematically showing judgment of colliding polygons in the embodiments;
Fig. 15 is a figure schematically showing the garment after the approximate correction is performed in a horizontal direction;
Fig. 16 is a figure schematically showing the garment after the approximate correction is performed in a vertical direction;
Fig. 17 is a figure schematically showing the smoothing in the embodiments;
Fig. 18 is a figure showing the garment from the front, after the smoothing is performed in the embodiments; and
Fig. 19 is a figure showing the garment from the side, after the smoothing is performed in the embodiments.

**BRIEF DESCRIPTION OF THE SYNBOLS**

| | | | | | |
|---|---|---|---|---|---|
| 2 | Wearing simulation device | 4 | Garment design unit | | |
| 6 | Manual input unit | 8 | Display unit | | |
| 10 | Color printer | 12 | 3D image storing unit | | |
| 14 | Data conversion unit | 16 | LAN interface | | |
| 18 | Disk drive | 20 | General-purpose memory | | |
| 22 | Preliminary deformation unit | 24 | 3D deformation unit | | |
| 26 | Wearing unit | 28 | Approximate correction unit | | |
| 30 | Smoothing unit | 32 | Rendering unit | | |
| 40 | Wearing program | 42 | Preliminary deformation unit | | |
| 43 | Boundary detection unit | 44 | Region attributing unit | | |
| 45 | Smoothing unit | 46 | Collar deformation unit | | |
| 50 | 3D deformation unit | 52 | Wearing unit | | |
| 53 | Axis storing unit | 54 | Polygon list | | |
| 55 | Vertex list | 56 | Tentative positioning unit | | |
| 57 | Collision polygon judgment unit | 58 | Stitch motion unit | | |
| 60 | Stitch data storing unit | 62 | Stitch data | | |
| 70 | Approximate correction unit | 71 | Horizontal correction unit | | |
| 72 | Vertical correction unit | 80 | Smoothing unit | | |
| 81 | Four-neighbor correction unit | 82 | Shrinking and expansion unit | | |
| 90 | Rendering unit | | | | |
| 91 | Polygon normal direction correction unit | | | | |
| 92 | Yarn model processing unit | 100 | Neck 100 | | |
| 102 | Shoulder | 104 | Torso surface | | |
| 106 | Body | 110 | Arm surface | | |
| 112 | Sleeve | 114 | Central axis of the sleeve | | |
| 116 | Sleeve after shrinking | 120 | Neck surface | | |
| 122 | Collar | 130 | Expanded tubular garment | | |
| 132 | Body after wearing | 134, 135 | Sleeve after wearing | | |
| 136, 137 | Split line | 140 | Axis | | |
| 141 to 144 | Polygon | 146 | Stitch before being moved | | |
| 147 | Stitch having collided with polygon | | | | |
| 152 | Body after approximate correction in the horizontal direction | | | | |
| 154, 155 | Sleeve after approximate correction in the horizontal direction | | | | |
| 156 | Line | 158a to 158c Polygon | | | |
| 159 | Stitch to be judged | | | | |
| 160a | Immediately preceding stitch on the same course | | | | |
| 160b | Stitch of one preceding course on the same wale | | | | |
| 160c | Stitch of one preceding course on the next wale | | | | |
| 160d | Stitch of one preceding course on the second to next wale | | | | |
| 161 | Stitch having not been judged yet | | | | |
| 162 | Body after approximate correction in the vertical direction | | | | |
| 164, 165 | Sleeve after approximate correction in the vertical direction | | | | |
| 168 | Approximate correction per wale in the vertical direction | | | | |
| 170 | Own stitch | 171 | Parent stitch | 172 | Child stitch |
| 173 | Right-hand adjacent stitch | 174 | Left-hand adjacent stitch | | |
| 176 | Position relative to four neighboring stitches after smoothing | | | | |
| B, C, D | Point at collar | B', C' | Point after moving | | |
| b | Axis of torso | ra | Axis of right arm | | |
| la | Axis of left arm | | | | |

### EMBODIMENT

The best mode for carrying out the invention is described hereinafter.

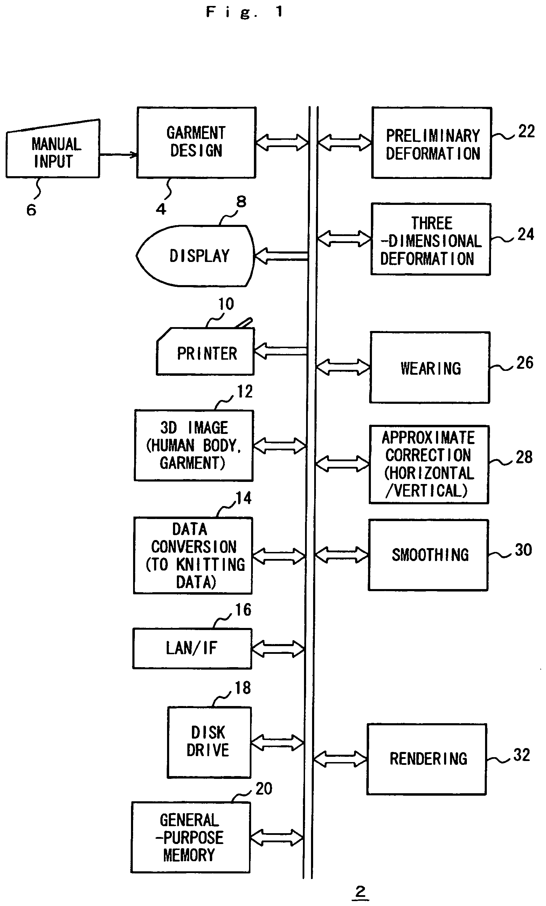

Fig. 1 through Fig. 19 shows the embodiments. Fig. 1 shows wearing simulation device 2 of the embodiments, in which the parts which are normally equipped in a knit design apparatus or 3D image processing apparatus are omitted. 4 is a garment design unit, which designs a knit garment by means of inputs from a manual input unit 6, a LAN interface 16, a disk drive 18 and the like. A knit garment to be designed is, for example, a seamless tubular garment, but a garment with stitches may be used. In this case, designing is performed by the garment design unit 4 in consideration of information on how each part is sewn. A display unit 8 displays various images, and functions as a graphic user interface to display an image of a process of designing in the garment design unit 4 and an image after wearing the garment to a human model. A color printer 10 prints these images.

3D image storing unit 12 stores an image of the human body and 3D image of a designed knit garment. As a human model, for example, a mannequin, a figure simulating an actual human body, or the like is used. Such a human model is constituted as a collection of approximately several ten thousands of polygons, and has at least three axes matched with the torso and both arms. It is preferred that the polygons be classified into 10 through 20 groups. A data conversion unit 14 converts design data of the garment created by the garment design unit 4 to composition data. Target data for wearing simulation may be the composition data after conversion or the design data before conversion. The LAN interface 16 connects the wearing simulation device 2 to a LAN, the disk drive 18 drives an appropriate disk, and a general-purpose memory 20 stores various data.

A preliminary deformation unit 22 deforms the data of the designed garment to a natural state. Here, "natural state" means a state in which, for example, the garment is placed gently on a plane surface or a state in which the garment is gently placed vertically while supporting the gravity of the garment with the line of shoulders.

It should be noted that this specification does not cover an actual garment but the design data of the garment. Therefore, images showing the design data and a virtual garment which simulates these images are referred simply as a "garment".

Furthermore, in this specification, the simulation device, simulation method, and simulation program are integrated. Therefore, the descriptions regarding the simulation device 2 apply to the simulation method and simulation program, and the descriptions regarding the simulation method and simulation program apply to the simulation device 2.

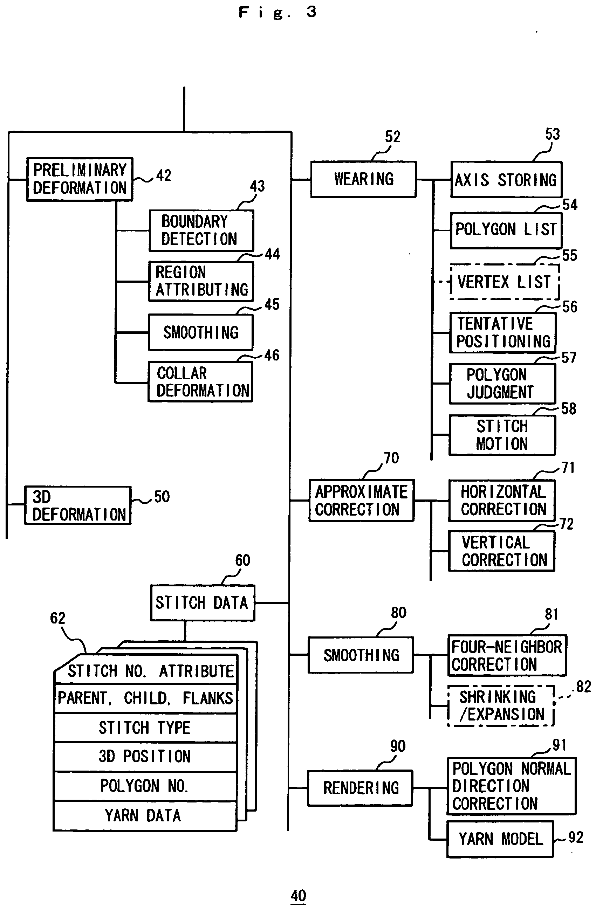

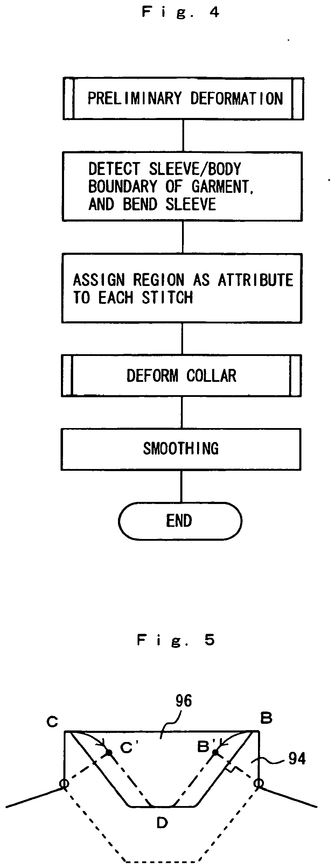

For example, the preliminary deformation unit 22 deforms the collar of the garment, and this mode is described using wearing program 40 shown in Fig. 3 and preliminary deformation shown in Fig. 4. The explanations thereof apply to the preliminary deformation unit 22 shown in Fig. 1, suppose that functions required in Fig. 3 or Fig. 4 are also provided in the preliminary deformation unit 22 shown in Fig. 1. This point also applies to other parts in the wearing simulation device 2.

3D deformation unit 24 expands a body and both sleeves of garment comprising these three parts into an elliptic cylindrical shape. When considering other vertical expansions of the garment caused by the gravity, the 3D deformation unit 24 expands the garment in these other vertical directions. Wearing unit 26 temporarily positions the garment with respect to the human model, shrinks/expands three parts of the body and both sleeves of the garment with respect to, for example, three axes of the torso and both arms, in the axial directions, to temporarily apply the garment to the human model.

Distortions are generated on the garment due to wearing. For example, at the connection between the sleeve and body, the body moves toward the axis of the torso and the sleeve moves toward an axis of an arm, thus a large distance is generated between adjacent stitches (knitted stitch). Therefore, an approximate correction unit 28 roughly corrects the stitch arrangement in two directions of a horizontal direction (course direction) and a vertical direction (wale direction). For example, in the correction in the horizontal direction, the approximate correction is performed so that stitches are arranged evenly in the course direction or each stitch is arranged at a midpoint between stitches on both sides in the course direction. Since wale directions are no longer linear due to concave and convex units of a surface of the human body and connections between the body and sleeves, the approximate correction in the vertical is performed on a deviation of a wale direction from a vertical line. For example, suppose that the position of each stitch is a mean position between the front and back wales at the same wale. In the vertical and horizontal approximate corrections, restrictions are applied in a range of movement so that the stitches do not collide with the polygons.

A smoothing unit 30 smoothes the stitch arrangement in the garment after the approximate correction, and moves each stitch to a mean position of, for example, four stitches, with consideration of the adjacent stitches at four positions of top, bottom, right, and left with respect to the abovementioned each stitch. Normally there are four stitches which are adjacent with one another at top, bottom, right, and left positions, but sometimes five stitches may be adjacent with one another at top, bottom, right, and left position in the case where two stitches at the bottom are overlapped on each other, and three stitches at top, bottom, and left, or top, bottom, and right may be adjacent to one another in the case of stitches at an end of a knitted fabric. The smoothing is preferably repeated until the stitch arrangement becomes stable and does not change. In order to express a case in which the garment is tightly fitted on the human model or a case in which the garment is large and loose for the human model, correction of the size of the garment is performed simultaneously, for example, with the smoothing. A rendering unit 32 assigns a model of a yarn to each stitch in the smoothed garment, and slides the stitch in a direction perpendicular to a polygon in accordance with the type of a face stitch or back stitch to increase the accuracy of a simulation image.

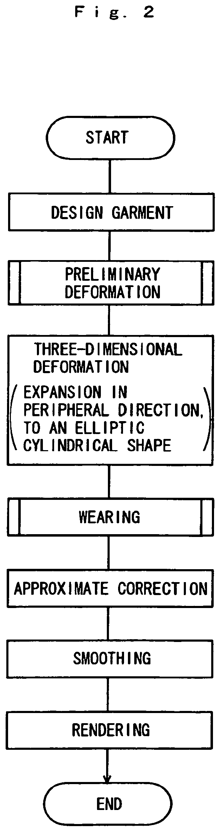

To illustrate an outline of wearing simulation method in Fig. 2, a seamless garment or the like is designed by the garment design unit 4, the garment is deformed by the preliminary deformation unit, and an image of the flat and natural garment is obtained. In solid deformation, the 3D deformation unit 24 expands each part of the garment into an elliptic cylindrical shape. At this moment the garment is expanded so that the length along the peripheral direction (course direction) thereof (peripheral length) increases. The shape of the ellipse and the like are defined appropriately so that the garment easily fits on the human model, but the shape of the ellipse may be a complete round in an extreme case. The number of the parts of the garment is at least three of the body and both sleeves, but these parts may be split to form more parts by adding, for example, tuck rib, collar, shoulder, pocket, fly, and the like.

In wearing processing, the garment which is expanded into a elliptic cylindrical shape by means is solid deformation is temporarily applied to the human model, the distortions of the stitch arrangement caused by approximate correction during wearing are removed, and the stitch arrangement is further smoothed by means of the smoothing processing. Thereafter, by means of rendering, a visual beauty is added to the image to obtain an image suitable for outputting to the display unit 8 or printer 10. It should be noted that the smoothing and the rendering may be performed simultaneously.

Fig. 3 shows an outline of the wearing program 40, in which the programs required in garment design or the programs required in normal 3D image processing are omitted. 42 is a preliminary deformation unit, and uses a boundary detection unit 43 to detect a boundary of each part of the garment, whereby the garment is split into parts such as a body, right sleeve, left sleeve, back collar, front collar, tuck rubber, and the like, and each stitch of the garment is applied to these parts (part name) as attributes by a region attributing unit 44. As a result, each stitch and each unit (part) are matched with each other.

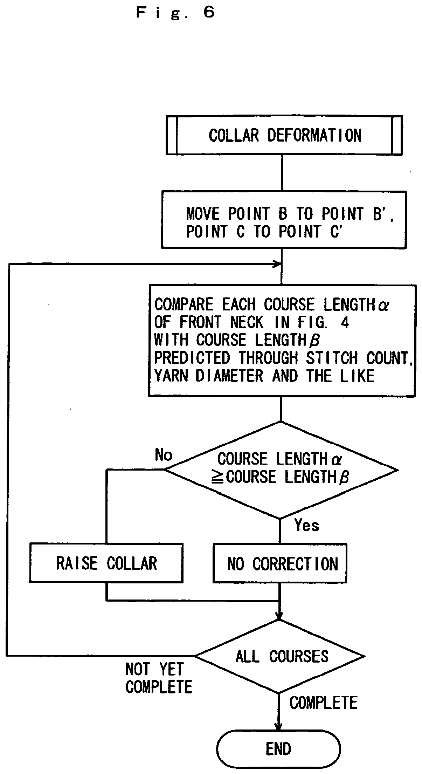

A smoothing unit 45 smoothes the design data of the garment into a natural form. Accordingly, each stitch is added with a natural size, and both sleeves are inclined to the body, whereby the shape of each part is formed into a natural shape. A collar deformation unit 46 levels (lays down) a front collar and deforms the collar so that a back collar comes around the front collar side. The detail of collar deformation is described with reference to Fig. 5 and Fig. 6.

3D deformation unit 50 virtually expands the garment into an elliptic cylindrical shape. Wearing unit 52 stores the position of each axis of the human model in an axis storing unit 53. Further, a polygon list 54 stores a list of polygons on the surface of the human model. The number of polygons is, for example, approximately several ten thousand. Each polygon is a triangle or square, for example, and data of the polygons include a polygon number, 3D coordinate of the vertex of each polygon, normal vector, and the like. The polygons are classified into each part such as a torso, right arm, left arm, neck, and the like, and preferably classified into 10 through 20 types of groups when simulating, for example, a sweater or the like. Moreover, in order to clearly understand the relationship between adjacent polygons, an vertex list 55 may be provided to store the list of polygon numbers which shares an vertex, for an vertex of a polygon.

A tentative positioning unit 56 temporarily positions each part of the garment with respect to the human model before wearing the garment to the human model. At this moment, the garment is already expanded by the 3D deformation unit 50. A collision polygon judgment unit 57 matches each stitch to a polygon. When a stitch is on the external side of the human model, a foot of a perpendicular is dropped from the stitch with respect to an axis matched with a part to which this stitch belongs, and this perpendicular judges a colliding polygon. When the stitch is on an internal side of the human model, the perpendicular which is dropped from the stitch to the axis is elongated, and a colliding polygon is judged. Mostly, the number of stitches is ten thousand or more in the case of a sweater, thus, by splitting the polygons into groups, the number of polygons that may collide is reduced by approximately 1/10 through 1/20, and judgment of colliding polygons is made efficient without using best-subset selection as much as possible when judging which polygon collides.

A stitch motion unit 58 moves each stitch toward a polygon obtained by the collision polygon judgment unit 57 so as to obtain a position at which each stitch collides with a polygon and rebounds slightly in the original direction or a state in which a stitch is placed outside a polygon and the garment is virtually applied to the human model. The garment has its natural size which is determined according to the number of stitches and the size of each stitch, and the garment which is expanded by stretching the peripheral length should shrink until the peripheral length becomes its natural size. Therefore, a stitch is moved while monitoring the number of stitches per length and the like, shrinking of the garment is stopped when the stitch collides with a polygon, and the shrinking is stopped when the number of stitches per length in the course direction reaches a predetermined value, even when the stitch does not collide with a polygon.

The process before wearing is to form the garment into a relatively natural shape by means of the preliminary deformation, expand the garment by means of the solid deformation, shrink the garment to achieve a size which is more natural than that of before wearing, and apply the garment to the human model. This processing is a model a process in which a garment which is expanded by putting a torso and arm therethrough when wearing the knit garment is caused to shrink to fit with the human body.

How the stitch data is handled in such processing is described using a stitch data storing unit 60. A stitch is applied with attributes such as a stitch number and a matching part name, and a numbers of a parent stitch, child stitch, and an adjacent stitch on each side are stored as the stitch data. It should be noted that the parent stitch is a stitch which holds, for example, its own sinker loop (a following stitch after a course), and the child stitch is, for example, a stitch below one course.

Further, types of a stitch such as the presence a face stitch/back stitch, racking and the like are stored for each stitch. By moving a stitch to the vicinity of a surface of a polygon, the stitch is added with a three-dimensional coordinate (3D position). A direction in which the surface containing a loop of the stitch is parallel to a surface of a polygon and is perpendicular to the stitch is stored as a normal vector of the polygon. Further, since a stitch is matched with a polygon, a polygon number to which each stitch belongs is stored, and, for example, an average of approximately one through ten stitches are matched with one polygon. Data of a yarn as a material of the garment is stored for each stitch or each group of stitches, and the detail of the yarn data is applied by a yarn model.

An approximate correction unit 70 comprises a horizontal correction unit 71 and a vertical correction unit 72, and approximate correction is performed approximately one through several times in a horizontal direction and a vertical direction. A smoothing unit 80 is provided with, for example four-neighbor correction unit 81, wherein, for each stitch, four proximate stitches at its major, minor (top and bottom), right and left position are used to smooth these positions. When moving the stitch toward an axis, the movement may be ended when the peripheral length of each course of the garment remains longer than the natural peripheral length, and thereafter the garment may be caused to shrink. In this case, a shrinking and expansion unit 82 is provided to shrink or expand the garment until the size of each stitch becomes a realistic size after the approximate correction.

A rendering unit 90 subjects the garment obtained after the smoothing to rendering simultaneously with the smoothing. First, using a polygon normal direction correction unit 91, the position in a normal direction of a polygon is corrected in accordance with the type of a stitch (type of a stitch) such as a face stitch or back stitch of each stitch. For the position in the normal direction of the polygon, the polygon surface is se to 0 and the external side of the human model is set to +. For example, in the case of a rib knitted fabric, a face stitch is positioned higher than a back face from a polygon. In this manner, the three-dimensional shape of the garment is corrected in accordance with a knit network. Moreover, using a yarn model processing unit 92, a yarn model is applied to each stitch. For example, if each yarn is constituted from two parts of a core and fluff, 3D image of each stitch is configured from a core and fluff and allowed to have a concrete color tone and thickness. Thereafter, appropriate shading is applied so that simulation of a garment having a three-dimensional appearance and shadows can be performed.

Fig. 4 shows an algorithm of preliminary deformation, wherein boundaries between the parts such as the sleeves and body of the garment are detected, and a natural deformation such as bending is applied to the sleeves and body in response to a result of the detection. Since the boundaries between the parts are detected, units as attributes can be applied to the stitches. Further, the collar is deformed as shown in Fig. 5 and Fig. 6. In Fig. 5, 94 is a front collar and 96 is a back collar. Points B, C at both ends of the front collar 94 are directed in a direction perpendicular to a dropping line of the collar and are rotated from a base point of the collar. In this manner, the points B, C are moved to points B', C'. Furthermore, when leveling the front collar 94 the back collar 96 also deforms in response thereto.

In the deformation algorithm of the collar, the front collar 94 is first leveled, and then, if it is laid down excessively, it is formed into a natural collar shape. The B point is moved to the B' point and the C point to the C' point. Thereafter, for each course running from a lower side to the upper side of the front collar 94, a course length α in a state of the leveled collar as shown in Fig. 5 is compared with a course length β which is predicted from the number of stitches in each course and the diameter of a yarn. If the course length α is shorter than the course length β, it means that the collar is laid down excessively, thus the next course is raised to raise the collar such that the prior course overlaps with a perpendicular direction. If the course length α is longer than the course length β, it means that the collar is leveled naturally as shown in Fig. 5, thus no correction is added to this course. When performing this processing in all courses, the front collar 94 can be leveled as shown in Fig. 5 and the back collar 96 can be bring around the front collar 94. Thereafter, for example, the stitch arrangement is smoothed so that a stitch in the middle between the top, bottom, right, and left adjacent stitches comes to the mean position of these adjacent stitches.

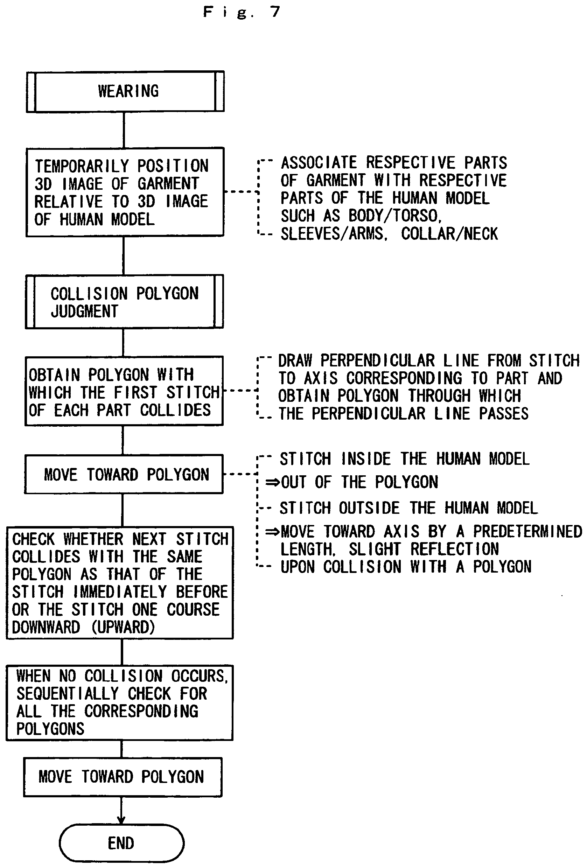

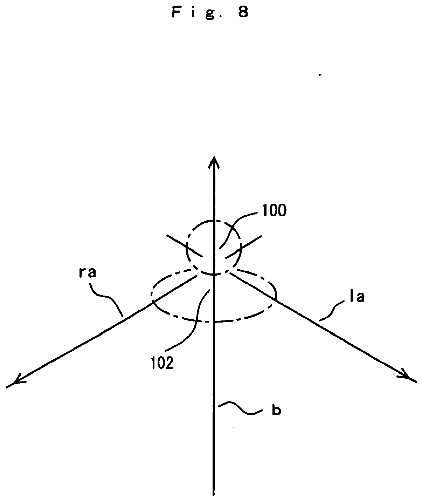

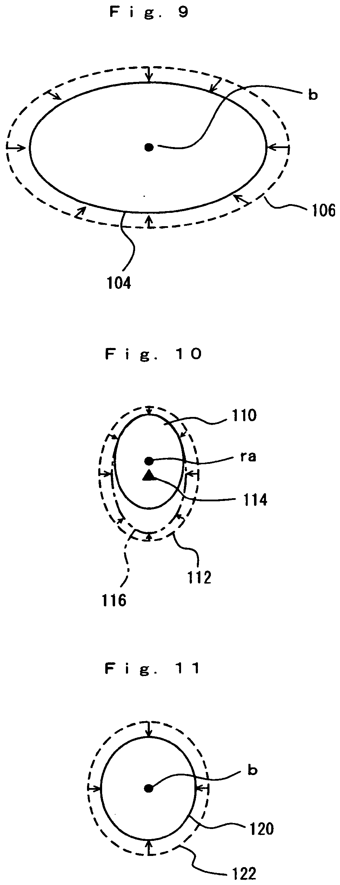

A process of temporarily wearing the garment to the human model is explained using Fig. 7 through Fig. 12. As shown in Fig. 8, the human model has at least three axes of a torso b, right arm ra, and left arm la. Although these axes are straight line, they may be curved. An intersection of these three axes corresponds to a neck 100, and a lower part thereof corresponds to a shoulder 102. 104 in Fig. 9 is a torso surface when viewed horizontally, which is constituted actually from a number of polygons. A body 106 which is expanded by means of solid expansion is in the form of an elliptic cylinder and arranged so as to encompass the torso surface 104. The body 106 is temporarily arranged in a position substantially proper with respect to the torso by means of the tentative positioning unit 56. Each stitch of the body 106 is caused to shrink toward the axis b of the torso and collides with a polygon, and the shrinking is stopped when the stitch collides with a polygon or once the number of stitches per length reaches a predetermined value. When a part of a stitch of the course is supposedly positioned on an inner side of the polygon due to the unevenness of the torso surface, the stitch moves away from the axis to come outside of the polygon, and, when the number of stitches per length reaches a predetermined value, expansion of the stitch stops.

110 in Fig. 10 is an arm surface, 112 is a sleeve, and a central axis 114 of the sleeve is positioned substantially on, for example, a lower side from the axis of the arm such as the right arm axis ra. From this point, when the sleeve 112 is caused to shrink as indicated with the arrows in Fig. 10, an upper part of a sleeve after shrinking 116 substantially fits on an upper part of the arm, forming a space between a lower part of the sleeve and the arm. By arranging the central axis 114 of the sleeve on substantially a lower side from the axis of the arm and causing the sleeve to shrink, the upper part of the sleeve contacts with the arm, and the lower part of the sleeve drops to form a natural shape thereof. Besides these steps, the shrinking speed in a vertical direction of the sleeve may be changed to change the speed of upward shrinking from the lower side of the sleeve may be reduced. In this case, the axis 114 may be arranged in the same position as the axis ra or the like. 120 in Fig. 11 is a neck surface. The torso axis b penetrates, for example, the center of the neck surface and, as in the case of the body, a collar 122 is caused to shrink in the direction of the arrows shown in Fig. 11.

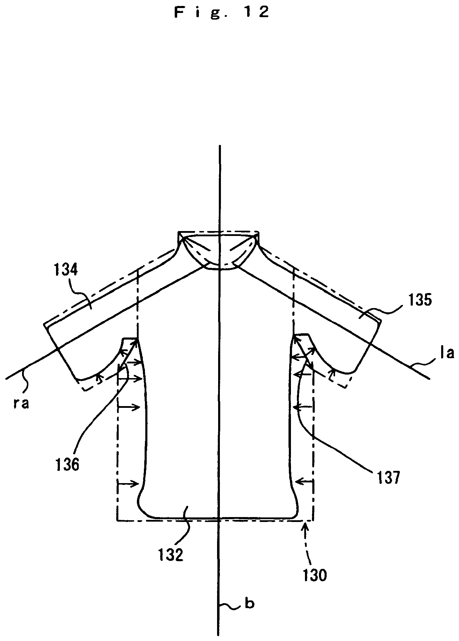

Fig. 12 shows a state in which a garment is temporarily worn, wherein 130 is an expanded tubular garment before worn. When the garment is worn as shown in Fig. 7 through Fig. 11, a body 132 and axes 134, 135 after wearing are obtained. In the units of split lines 136, 137, the stitch of the body and the stitches of the axes before worn are adjacent to each other. However, the stitch of the body shrinks in the horizontal direction of Fig. 12, and the stitches of the axes shrink obliquely upward in Fig. 12, thus a large space is generated between the adjacent stitches at the units of the split lines 136, 137. Accordingly, each part of the garment is shrunk/expanded toward the matching axis, thus distortions are generated at boundary units between parts.

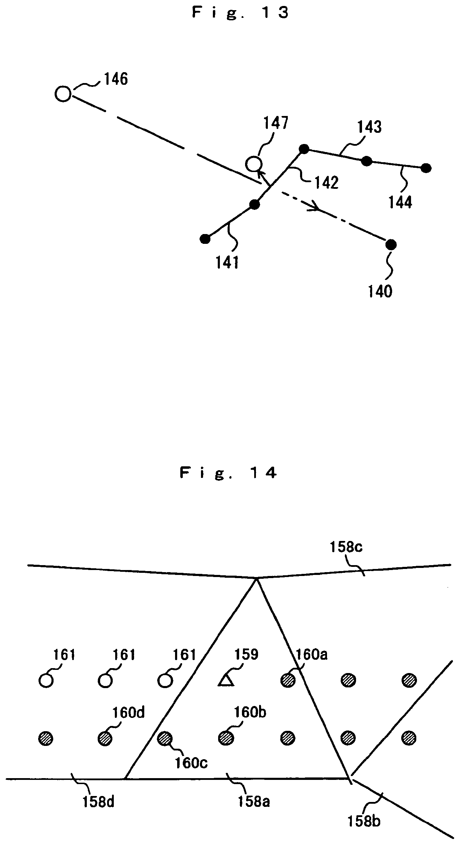

Fig. 13 shows judgment of polygon colliding to each stitch. 140 is an axis matched with a part, 141 through 144 are polygons, and an edge of a boundary between the polygons is shown with a black circle. A stitch 146 before movement is moved along a direction of a perpendicular dropped to the axis 140, and the polygon 142 through which the perpendicular passes is a colliding polygon. There is a limit in the movement of the stitch 146 such that the stitch does not shrink smaller than the natural peripheral length of a course. When the stitch collides with the polygon 142 in this limit, the stitch rebounds slightly toward a direction of, for example, the stitch before movement, and moves to a position of a stitch 147 which collides with a polygon. Even when splitting several ten thousands of polygons into approximately 10 through 20 groups, the number of polygons per part is in at least one thousand, thus it is inefficient to use best-subset collection to detect which polygon is collided. Therefore, in the algorithm shown in Fig. 7, by means of best-subtle selection, for example, or by means of an appropriate searching rule, a polygon which collides with the first stitch of each part is judged. Regarding the subsequent stitches, a polygon with which an immediately before stitch, a stitch below one course, or a stitch above one course collides is considered first as a colliding polygon candidate. When this colliding polygon candidate is not collided, the scope of searches for other polygons is expanded. In this manner, judgment of colliding polygons is performed efficiently.

Fig. 14 shows an example of the polygon judgment, wherein 158a through d are polygons, and the course direction for composition runs from the right to the left. Since tubular composition is made on the periphery, the course direction is constant. Black circle stitches indicate that which polygon is collided is already judged, and while circle stitches indicate that which polygon is collided is not judged yet. In this example a polygon with which a stitch 159 collides is searched. First, a polygon which collides with a stitch 160a positioned immediately before the same course is taken as a candidate, and whether the stitch collides with this polygon or not is judged. If the stitch does not collide, in the previous course of this course a polygon which collides with a stitch 160b on the same wale is taken as a candidate, and whether this stitch collides with this polygon is judged in the same manner. When the stitches 160a and 160b collide with a polygon different from the one which collides with these stitches, the rest of the polygon may be found by means of best-subset selection in an appropriate order, or a candidate of a polygon colliding with a stitch 160c on the next wale at the previous course or the stitch 160d on the next but one wale may be continuously searched. In the judgment of colliding polygons, a polygon with which the nearest stitch collides is taken as a candidate.

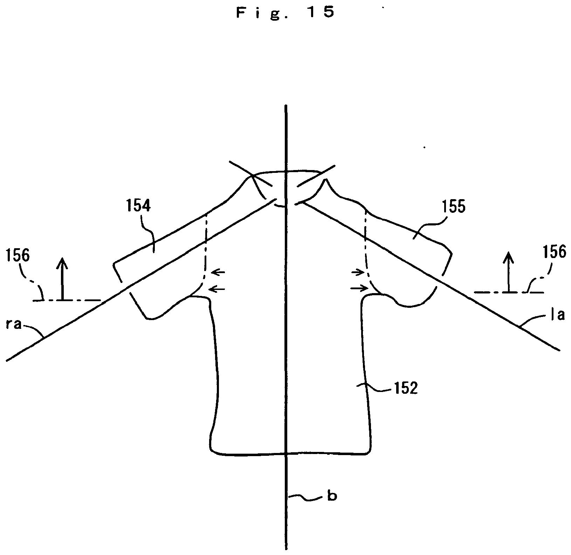

In Fig. 15, 152 is a body which is subjected to the approximate correction in the horizontal direction, and 154 and 155 are sleeves which are subjected to the correction in the horizontal direction. In the approximate correction in the horizontal direction, stitches are rearranged along each course of the sleeves and body, wherein, for example, the stitches are arranged at regular intervals, or each stitch is rearranged so that the space between both right and left stitches is constant. According to these rules, each stitch is moved in the course direction. As a result, the stitch moves in the course direction so that the stitches of the body embeds the units of the split lines 136 and 137 shown in Fig. 12, and a gap generated between the sleeve and body is embedded.

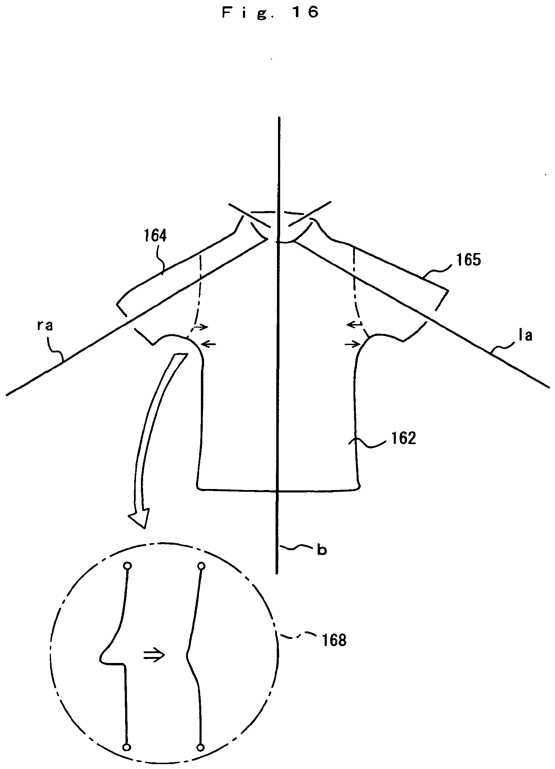

The arrangement of the wale of the boundaries between the sleeves and the body in Fig. 15 is unnatural. In addition, since various concave and convex units are formed on the human model, the approximate correction is performed along the wale direction (vertical direction). 162 in Fig. 16 is a body after subjected to the approximate correction in the horizontal direction, and 164 and 165 are sleeves after subjected to the approximate correction in the vertical direction. For each wale of each part, a model is used in which a stitch attempts to approach the middle of two top and bottom stitches with respect to a vertical direction and a direction within a horizontal plane perpendicular to this vertical direction, the approximate correction is added in a vertical direction. At this moment, when the stitch collides with a polygon during the process of correction, rules are added such as changing the destination to a position where the stitch does not collide or the stitch cannot be moved. These rules apply in the approximate correction in a horizontal direction. 168 in Fig. 16 indicates the approximate correction in the vertical direction for one wale, and indicates one wale of the body in the vicinity of the connection between the sleeve and the body. The approximate correction is added in the vertical direction in this manner. The approximate correction is performed once in each of the horizontal and vertical direction in this embodiment, but the approximate correction is repeated a plurality of times according to need to remove the distortions generated due to wearing of the garment.

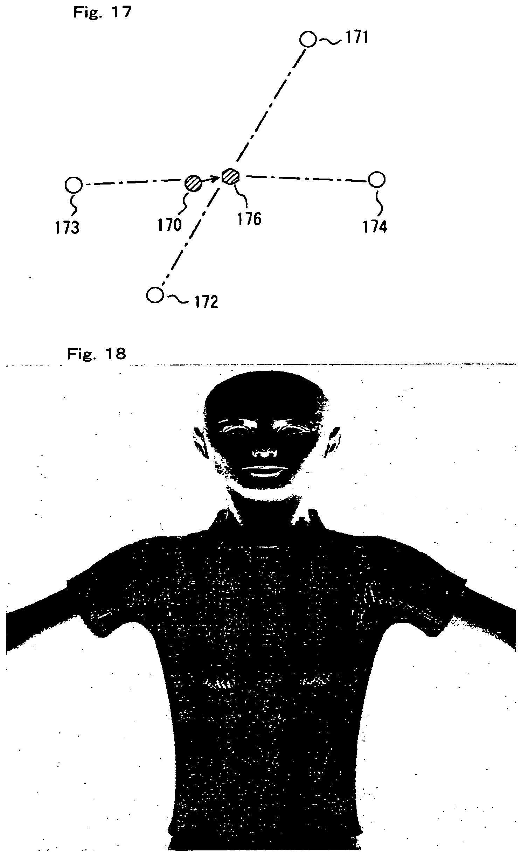

Fig. 17 shows smoothing of the stitch after the approximate correction. 170 is an own stitch, 171 is a parent stitch (stitch next to one course (top) in the same wale), 172 is a child stitch (stitch below one course on the same wale), 173 is a right adjacent stitch, and 174 is a left adjacent stitch. The position of each stitch is indicated by the position of, for example, a needle loop, the position of the parent stitch is defined by, for example, the position of a sinker loop, and the arrangement of the jump stitch between the right and left stitch in the same course becomes clear if the position of the own stitch and the positions of he right and left stitches are found.

The own stitch 170 is moved to the mean position of the four proximate surrounding stitches 171 through 174, and 176 is a position subjected to the smoothing with respect to the top, bottom, right, and left four proximate stitches. The smoothing is performed, for example, from one end to the other end of each course of the garment of from, for example, an upper course to a lower course of the garment. Moreover, the smoothing is not performed for a course such as the lowest end course or the top most end course in which the four proximate stitches do not exist. Alternatively the own stitch is moved to the mean position between the right and left stitches. Here, the smoothing of the top, bottom, right, and left four proximate stitches is performed, but other top, bottom, right and left four stitches may be added in an oblique direction to perform the smoothing using surrounding eight proximate stitches. The smoothing is performed approximately a hundred through ten thousand times, and whether to perform convergence judgment on stitch positions during this numbers of smoothing processes is optional. By moving the virtual garment toward, for example, the axes of sleeves and the axis of torso, performing the approximate correction to remove the distortions caused by moving the garment, and due to the unevenness formed on the human model, the stitch arrangement has some unnatural points. The stitch positions are smoothed by repeatedly smoothing the top, bottom, right and left four proximate stitches.

The size of a stitch in a horizontal direction (the size in a course direction) is expanded by expanding the body or sleeves, the garment is virtually applied to the human model, and the peripheral length is caused to shrink toward the length which is predicted from the yarn diameter or the number of stitches, whereby the size in the horizontal direction is substantially a natural size. When, for example, the garment collides with the human model and cannot shrink sufficiently, this size is larger than the size predicted from the diameter of a yarn constituted from four yarns, and in other cases, the size is a size which is predicted from the diameter of the yarn constituted from four yarns. At the same time when the smoothing is performed, the size of the stitch in the horizontal direction may be proximate to a natural size which is predicted from the yarn diameter and the like. The size of a stitch in a vertical direction is made substantially natural by means of preliminary deformation, and is slightly changed when moving toward the axes of torso and arms. In the approximate correction, the positions of the cuffs or the position of the tuck of the body (positions along the axes of arms and torso) may be fixed or unfixed. Moreover, for example, when the positions of the cuffs or the position of the tuck are not fixed, the size of the stitch in the vertical direction may be proximate to a natural size which is defined from the yarn diameter or composition conditions, at the same time when the smoothing is performed.

Next, after the smoothing is ended or at the same time when the smoothing is performed, the height of a stitch corresponding to a polygon is corrected. The height of a stitch corresponding to a polygon is indicated by the position of the normal direction of the polygon, which is a standard of the polygon surface. When the face or back continues with the parent stitches and child stitches, that is, when face/face or back/back continues along a wale direction, the position of the direction of the polygon normal line of the own stitch is brought close to the position of the direction of the polygon normal line of the parent stitch. When the face stitch is the parent stitch and the back stitch is the own stitch, the position of the direction of the polygon normal line of the own stitch is made higher than the parent stitch by the thickness of the yarn. On the other hand, when the back stitch is the parent stitch and the face stitch is the own stitch, the position of the direction of the polygon normal line of the own stitch is made lower than the parent stitch by the thickness of the yarn. In this manner, the height of each stitch is made natural with respect to the surface of the human model to express the heights different in accordance with the types of face stitch/back stitch.

By smoothing the stitch arrangement, each stitch is expressed using a yarn model constituted from, for example, a yarn main body and fluff. When the yarn main body and the fluff are translucent, and the thickness, color, reflectance, texture, and the like are defined by the yarn model, the yarn main body and fluff are arranged along the positions of a needle loop, sinker loop, and right and left adjacent loops of each stitch defined by the smoothing.

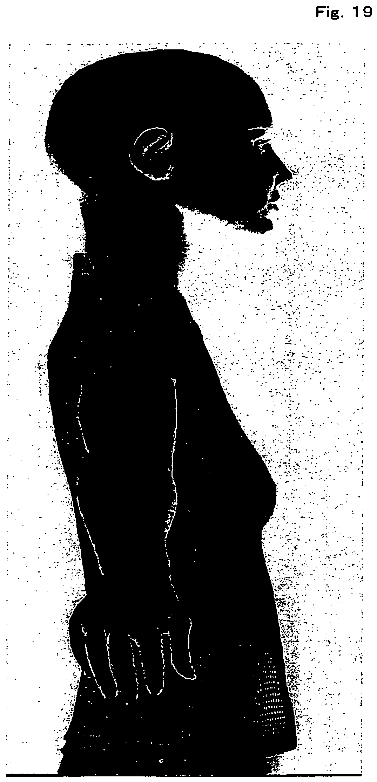

Fig. 18 and Fig. 19 show a simulation image of the knit garment after the smoothing. In the embodiments, calculation of the gravity of calculation of movement of a stitch caused by stress acting on the yarn are not performed. Further, in a model used here is configured simple such that the garment is deformed into a natural state, expanded, shrunk toward the axes of the human model, and applied to the human model. In the subsequent processing the stitch positions are roughly corrected by means of the approximate correction and are rearranged so that the space between stitches is made even in the smoothing. In such processing, no artificial assumption is used, and the outcomes obtained after the garment is worn can be simulated with a simple model without using any artificial assumptions.

The following effects can be achieved in the embodiments.
(1) Using relatively simple calculation procedures and a simple model, the garment can be applied to the human model.
(2) By applying each stitch with part name (unit), processing can be performed as to toward which axis the stitch shrinks.
(3) Using the information on the boundary between the parts, the sleeves can be bent naturally with respect to the body.
(4) Matching stitches with polygons can be performed efficiently without using best-subset selection.
(5) By shrinking the expanded garment, the garment can be applied to the human model in a natural size.
(6) By using relatively simple procedures, the sleeves which are supported vertically unevenly by the arms can be realized.
(7) The distortions which are caused by moving stitches toward the three axes for the torso and arms can be removed by performing the approximate corrections in the horizontal direction and vertical direction.
(8) By repeating the smoothing of the stitch arrangement, the stitches can be rearranged in natural and stable positions.
(9) By moving a stitch in a normal direction of a polygon in accordance with the type of face/back stitch, and by expressing the stitch in detail using a yarn model, the quality of the simulation image can be improved.

In the embodiment, wearing of the garment described as an example, but a pair of pants or slacks, or a dress may be used. For example, in the case of a pair of pants or slacks, three axes of the torso and both legs may be used. A part such as a turtleneck with a lapel may be folded when performing, for example, preliminary deformation.

## Claims

1. A computer-implemented method for simulating wearing of a knit garment on a human model, the knit garment being a virtual knit garment and having a plurality of parts (106, 112, 122, 130), the human model being a three-dimensional human model and comprising a plurality of polygons (141 to 144), **characterized in that** the method comprises the steps of:
providing the human model with a plurality of axes (b, la, ra);
matching each of the parts (106, 112, 122, 130) of the knit garment with any of the plurality of axes (b, la, ra) and temporarily positioning the knit garment with respect to the human model; and
shrinking/expanding the temporarily positioned knit garment toward the axis (b, la, ra) matched with each of the parts (106, 112, 122, 130) of the knit garment in a peripheral direction to obtain a natural size of each of the parts (106, 112, 122, 130), whereby the knit garment is worn on the human model so that each of the parts (106, 112, 122, 130) appears outside the human model.

2. The method for simulating wearing of claim 1, wherein:
the human model comprises at least a torso and both arms, along with an axis (b) of the torso, and axes (la, ra) of the right and left arms;
the plurality of parts (106, 112, 122, 130) of the virtual knit garment comprises at least a body (106) and sleeves (112), each of the parts (106, 112) is matched with any of the axes (b, la ra) of the human model, and the temporal positioning is performed so that the axis (b, la, ra) matched with each of the parts (106, 112) passes through the inside of each of the parts (106, 112); and
both of the sleeves (112) of the virtual garment are shrunk/expanded such that upper parts of the both sleeves (112) contact with upper parts of the arms of the human model and spaces are provided at lower parts of the both sleeves (112) with respect to the upper parts of the arms of the human model.

3. The method for simulating wearing of claim 2, wherein after wearing the virtual knit garment on the human model, each stitch of the virtual knit garment is rearranged along a course direction and a wale direction of the virtual knit garment, whereby distortions between parts (122, 134, 135) having different matching axes on the virtual knit garment are removed.

4. The method for simulating wearing of claim 1, wherein after wearing the knit garment, each of stitches (170 - 174) of the knit garment is moved close to a mean position of surrounding stitches (170 - 174), whereby positions of the stitches of the knit garment are smoothed, and the smoothing is repeatedly performed.

5. A device (2) for simulating wearing of a knit garment on a human model, the knit garment being a virtual knit garment and having a plurality of parts (106, 112, 122, 130), the human model being a three-dimensional human model and comprising a plurality of polygons (141 to 144), **characterized in that** the device comprises:
storage means (12) for storing positions of a plurality of axes (b, la, ra) provided on the human model;
matching means (26) for matching each of the parts (106, 112, 122, 130) of the knit garment with any of the plurality of axes (b, la, ra);
temporary arranging means (26) for temporarily arranging each of the parts (106, 112, 122, 130), within a three-dimensional space, with respect to the matching axis (b, la, ra); and
wearing means (26) for shrinking/expanding each of the parts in a peripheral direction toward the matching axis to obtain a natural size of each of the parts (106, 112, 122, 130) so that each of the parts (106, 112, 122, 130) appears outside the human model,
wherein the knit garment which is temporarily positioned with respect to the axes (b, la, ra) is shrunk/expanded toward the axis (b, la, ra) matched with each of the parts (100 to 112, 122, 130), and thereby worn on the human model.

6. The device (2) for simulating wearing of claim 5, wherein the virtual knit garment comprises a body (106) and both sleeves (112), the human model comprises a torso, both arms, and axes (b, la, ra) of the torso and the both arms, and, by way of the wearing means (26), the both sleeves (112) of the virtual garment are shrunk/expanded such that upper parts of the both sleeves (112) contact with upper parts of the arms of the human model and spaces are provided at lower parts of the both sleeves (112) with respect to the lower parts of the arms of the human model.

7. The device (2) for simulating wearing of claim 6, further comprising correction means (28) for, after wearing the virtual knit garment on the human model, rearranging stitches along a course direction and a wale direction of the virtual knit garment to remove distortions between parts (132, 134, 135) having different matching axes (b, la, ra) on the virtual knit garment.

8. The device (2) for simulating wearing of claim 5, further comprising:
smoothing means (30) for smoothing positions of stitches (170 - 174) of the knit garment by moving each of the stitches (170 - 174) of the knit garment close to a mean position of surrounding stitches after wearing the knit garment on the human model; and
repeating means (30) for causing the smoothing means (30) to repeatedly perform the smoothing of the positions of the stitches.

## Patentansprüche

1. Computerimplementiertes Verfahren zum Simulieren des Tragens eines Strickkleidungsstücks an einem menschlichen Modell, wobei das Strickkleidungsstück ein virtuelles Strickkleidungsstück ist und eine Vielzahl von Teilen (106, 112, 122, 130) aufweist, wobei das menschliche Modell ein dreidimensionales menschliches Modell ist und eine Vielzahl von Polygonen (141 bis 144) aufweist, **dadurch gekennzeichnet, dass** das Verfahren die folgenden Schritte umfasst:
Vorsehen des menschlichen Modells mit einer Vielzahl von Achsen (b, la, ra),
Anpassen jedes der Teile (106, 112, 122, 130) des Strickkleidungsstücks zu einer aus der Vielzahl von Achsen (b, la, ra) und vorläufiges Positionieren des Strickkleidungsstücks in Bezug auf das menschliche Modell, und
Schrumpfen/Dehnen des vorläufig positionierten Strickkleidungsstücks zu der Achse (b, la, ra) hin, die mit jedem der Teile (106, 112, 122, 130) des Strickkleidungsstücks angepasst sind, in einer peripheren Richtung, um eine natürliche Größe jedes der Teile (106, 112, 122, 130) zu erhalten, wobei das Strickkleidungsstück an dem menschlichen Modell derart getragen wird, dass jedes der Teile (106, 112, 122, 130) außerhalb des menschlichen Modells erscheint.

2. Verfahren zum Simulieren des Tragens nach Anspruch 1, wobei:
das menschliche Modell wenigstens einen Torso und zwei Arme sowie eine Achse (b) des Torsos und Achsen (la, ra) der rechten und linken Arme umfasst,
die Vielzahl von Teilen (106, 112, 122, 130) des virtuellen Strickkleidungsstücks wenigstens einen Hauptteil (106) und Ärmel (112) umfasst, wobei jeder der Teile (106, 112) einer der Achsen (b, la, ra) des menschlichen Modells angepasst ist, und die vorläufige Positionierung derart durchgeführt wird, dass die jedem der Teile (106, 112) zugeordnete Achse (b, la, ra) durch das Innere jedes der Teile (106, 112) verläuft, und
beide Ärmel (112) des virtuellen Kleidungsstücks derart geschrumpft/gedehnt werden, dass obere Teile der beiden Ärmel (112) obere Teile der Arme des menschlichen Modells kontaktieren und Zwischenräume an unteren Teilen der beiden Ärmel (112) in Bezug auf die oberen Teile der Arme des menschlichen Modells vorgesehen sind.

3. Verfahren zum Simulieren des Tragens nach Anspruch 2, wobei nach dem Tragen des virtuellen Strickkleidungsstücks an dem menschlichen Modell jede Masche des virtuellen Strickkleidungsstücks entlang einer Maschenreihenrichtung und einer Maschenstäbchenrichtung des virtuellen Strickkleidungsstücks umgeordnet wird, wodurch Verzerrungen zwischen Teilen (122, 134, 135) mit verschiedenen zugeordneten Anpassungs-Achsen an dem virtuellen Strickkleidungsstück entfernt werden.

4. Verfahren zum Simulieren des Tragens nach Anspruch 1, wobei nach dem Tragen des Strickkleidungsstücks jede der Maschen (170-174) des Strickkleidungsstücks nahe zu einer mittleren Position zwischen umgebenden Maschen (170-174) bewegt wird, wodurch die Positionen der Maschen des Strickkleidungsstücks geglättet werden, und wobei das Glätten wiederholt durchgeführt wird.

5. Vorrichtung (2) zum Simulieren des Tragens eines Strickkleidungsstücks an einem menschlichen Modell, wobei das Strickkleidungsstück ein virtuelles Strickkleidungsstück ist und eine Vielzahl von Teilen (106, 112, 122, 130) aufweist, wobei das menschliche Modell ein dreidimensionales menschliches Modell ist und eine Vielzahl von Polygonen (141 bis 144) aufweist, **dadurch gekennzeichnet, dass** die Vorrichtung umfasst:
Speichermittel (12) zum Speichern von Positionen einer Vielzahl von Achsen (b, la, ra), die an dem menschlichen Modell vorgesehen sind,
Anpassungsmittel (26) zum Anpassen jedes der Teile (106, 112, 122, 130) des Strickkleidungsstücks an eine aus der Vielzahl von Achsen (b, la, ra),
Vorläufige-Anordnungs-Mittel (26) zum vorläufigen Anordnen jedes der Teile (106, 112, 122, 130) in einem dreidimensionalen Raum in Bezug auf die Anpassungs-Achse (b, la, ra), und
Tragemittel (26) zum Schrumpfen/Dehnen jedes der Teile in einer peripheren Richtung zu der Anpassungs-Achse hin, um eine natürliche Größe jedes der Teile (106, 112, 122, 130) zu erhalten, sodass jedes der Teile (106, 112, 122, 130) außerhalb des menschlichen Modells erscheint,
wobei das Strickkleidungsstück, das vorläufig in Bezug auf die Achsen (b, la, ra) positioniert ist, zu der jedem der Teile (100 bis 112, 122, 130) angepassten Achse (b, la, ra) geschrumpft/gedehnt wird, um dadurch an dem menschlichen Modell getragen zu werden.

6. Vorrichtung (2) zum Simulieren des Tragens nach Anspruch 5, wobei das virtuelle Strickkleidungsstück einen Hauptteil (106) und zwei Ärmel (112) umfasst, wobei das menschliche Modell einen Torso, zwei Arme sowie Achsen (b, la, ra) des Torsos und der beiden Arme umfasst, wobei unter Verwendung der Tragemittel (26) die beiden Ärmel (112) des virtuellen Kleidungsstücks derart geschrumpft/gedehnt werden, dass obere Teile der beiden Ärmel (112) obere Teile der Arme des menschlichen Modells kontaktieren und Zwischenräume an unteren Teilen der beiden Ärmel (112) in Bezug auf die unteren Teile der Arme des menschlichen Modells vorgesehen werden.

7. Vorrichtung (2) zum Simulieren eines Tragens nach Anspruch 6, die weiterhin Korrekturmittel (28) umfasst, um nach dem Tragen des virtuellen Kleidungsstücks an dem menschlichen Modell Maschen entlang einer Maschenreihenrichtung und einer Maschenstäbchenrichtung des virtuellen Strickkleidungsstücks umzuordnen, um Verzerrungen zwischen Teilen (132, 134, 135) mit verschiedenen Anpassungs-Achsen (b, la, ra) an dem virtuellen Strickkleidungsstück zu entfernen.

8. Vorrichtung (2) zum Simulieren des Tragens nach Anspruch 5, das weiterhin umfasst:
Glättungsmittel (30) zum Glätten der Positionen von Maschen (170-174) des Strickkleidungsstücks durch das Bewegen jeder der Maschen (170-174) des Strickkleidungsstücks nahe zu einer mittleren Position zwischen umgebenden Maschen nach dem Tragen des Strickkleidungsstücks an dem menschlichen Modell, und
Wiederholungsmittel (30) zum Veranlassen der Glättungsmittel (30) zu einem wiederholten Durchführen des Glättens der Positionen der Maschen.

## Revendications

1. Procédé mis en oeuvre sur un ordinateur pour simuler le port d'un vêtement tricoté sur un modèle humain, le vêtement tricoté étant un vêtement tricoté virtuel et comportant une pluralité de parties (106, 112, 122, 130), le modèle humain étant un modèle humain tridimensionnel et comprenant une pluralité de polygones (141 à 144), **caractérisé en ce que** le procédé comprend les étapes suivantes :
munir le modèle humain d'une pluralité d'axes (b, la, ra) ;
faire concorder chacune des parties (106, 112, 122, 130) du vêtement tricoté avec l'un de la pluralité d'axes (b, la, ra) et positionner temporairement le vêtement tricoté par rapport au modèle humain ; et
rétrécir/élargir le vêtement tricoté positionné temporairement en direction de l'axe (b, la, ra) qui concorde avec chacune des parties (106, 112, 122, 130) du vêtement tricoté dans une direction périphérique pour obtenir une taille naturelle de chacune des parties (106, 112, 122, 130), d'où il résulte que le vêtement tricoté est porté par le modèle humain de manière à ce que chacune des parties (106, 112, 122, 130) apparaisse à l'extérieur du modèle humain.

2. Procédé pour simuler le port d'un vêtement selon la revendication 1, dans lequel :
le modèle humain comprend au moins un torse et deux bras, le long d'un axe (b) du torse et d'axes (la, ra) pour les bras gauche et droit ;
la pluralité de parties (106, 112, 122, 130) du vêtement tricoté virtuel comprend au moins un corps (106) et des manches (112), chacune des parties (106, 112) est mise en concordance avec l'un des axes (b, la, ra) du modèle humain, et le positionnement temporel est réalisé de telle sorte que l'axe (b, la, ra) qui concorde avec chacune des parties (106, 112) passe par l'intérieur de chacune des parties (106, 112) ; et
les deux manches (112) du vêtement virtuel sont rétrécies/agrandies de telle sorte que des parties supérieures des deux manches (112) contactent des parties supérieures des bras du modèle humain et que des espaces sont prévus au niveau de parties inférieures des deux manches (112) par rapport aux parties supérieures des bras du modèle humain.

3. Procédé pour simuler le port d'un vêtement selon la revendication 2, dans lequel après avoir fait porter le vêtement tricoté virtuel par le modèle humain, chaque maille du vêtement tricoté virtuel est ré-agencée suivant une direction de course et une direction de colonne de mailles du vêtement tricoté virtuel, d'où il résulte que des distorsions entre des parties (122, 134, 135) ayant des axes de concordance différents sur le vêtement tricoté virtuel sont retirées.

4. Procédé pour simuler le port d'un vêtement selon la revendication 1, dans lequel après avoir fait porter le vêtement tricoté, chacune des mailles (170-174) du vêtement tricoté est déplacée pour venir près d'une position moyenne de mailles environnantes (170-174), d'où il résulte que des positions des mailles du vêtement tricoté sont lissées, et le lissage est réalisé de façon répétée.

5. Dispositif (2) pour simuler le port d'un vêtement tricoté sur un modèle humain, le vêtement tricoté étant un vêtement tricoté virtuel et comportant une pluralité de parties (106, 112, 122, 130), le modèle humain étant un modèle humain tridimensionnel et comprenant une pluralité de polygones (141 à 144), **caractérisé en ce que** le dispositif comprend :
des moyens de stockage (12) pour mémoriser des positions d'une pluralité d'axes (b, la, ra) prévus sur le modèle humain ;
des moyens de mise en concordance (26) pour faire concorder chacune des parties (106, 112, 122, 130) du vêtement tricoté avec l'un de la pluralité d'axes (b, la, ra) ;
des moyens d'agencement temporaire (26) pour agencer temporairement chacune des parties (106, 112, 122, 130), dans un espace tridimensionnel, par rapport à l'axe de concordance (b, la, ra) ; et
des moyens de port de vêtement (26) pour rétrécir / élargir chacune des parties dans une direction périphérique en direction de l'axe de concordance pour obtenir une taille naturelle de chacune des parties (106, 112, 122, 130) de telle sorte que chacune des parties (106, 112, 122, 130) apparaisse à l'extérieur du modèle humain,
dans lequel le vêtement tricoté qui est positionné de façon temporaire par rapport aux axes (b, la, ra) est rétréci / élargi en direction de l'axe (b, la, ra) qui concorde avec chacune des parties (100 à 112, 122, 130), et par cela porté sur le modèle humain.

6. Dispositif (2) pour simuler le port d'un vêtement selon la revendication 5, dans lequel le vêtement tricoté virtuel comprend un corps (106) et deux manches (112), le modèle humain comprend un torse, deux bras et des axes (b, la, ra) du torse et des deux bras, et, grâce aux moyens de port de vêtement (26), les deux manches (112) du vêtement virtuel sont rétrécies/élargies de telle sorte que des parties supérieures des deux manches (112) contactent des parties supérieures des bras du modèle humain et que des espaces sont prévus au niveau de parties inférieures des deux manches (112) par rapport aux parties inférieures des bras du modèle humain.

7. Dispositif (2) pour simuler le port d'un vêtement selon la revendication 6, comprenant en outre des moyens de correction (28) pour, après avoir fait porter le vêtement tricoté virtuel par le modèle humain, ré-agencer des mailles suivant une direction de course et une direction de colonne de mailles du vêtement tricoté virtuel pour retirer des distorsions entre des parties (132, 134, 135) ayant différents axes de concordance (b, la, ra) sur le vêtement tricoté virtuel.

8. Dispositif (2) pour simuler le port d'un vêtement selon la revendication 5, comprenant en outre :
des moyens de lissage (30) pour lisser des positions de mailles (170-174) du vêtement tricoté en déplaçant chacune des mailles (170-174) du vêtement tricoté pour venir près d'une position moyenne de mailles environnantes après avoir fait porter le vêtement tricoté par le modèle humain ; et
des moyens de répétition (30) pour amener les moyens de lissage (30) à réaliser de façon répétée le lissage des positions des mailles.
